# EUROPEAN PATENT SPECIFICATION

(11) **EP 4 450 401 B1**
(45) Date of publication and mention of the grant of the patent: **28.01.2026**
(21) Application number: 23382362.4
(22) Date of filing: 19.04.2023
(51) Int. Cl.: B64D 39/02

(54) **REFUELLING SYSTEM AND METHOD OF A TANKER AIRCRAFT COMPRISING A BOOM HOSE ADAPTOR**
BETANKUNGSSYSTEM UND VERFAHREN EINES TANKFLUGZEUGS MIT EINEM AUSLEGERSCHLAUCHADAPTER
SYSTÈME ET PROCÉDÉ DE RAVITAILLEMENT EN CARBURANT D'UN AVION-CITERNE COMPRENANT UN ADAPTATEUR DE TUYAU DE FLÈCHE

(43) Date of publication of application: 23.10.2024
(73) Proprietor: Airbus Defence and Space, S.A.U., 28906 Getafe - Madrid (ES)
(72) Inventor: MARTÍNEZ VÁZQUEZ, Bruno, 28906 Getafe (ES)
(74) Representative: Elzaburu S.L.P.

(56) References cited:
- WO-A1-2010/065036
- US-A1- 2006 214 059
- US-A1- 2014 203 147
- US-A1- 2015 293 225
- US-A1- 2019 071 300
- US-A1- 2021 039 804
- US-B1- 6 324 295
- US-B1- 8 733 704
- US-B2- 7 147 186

## Description

### Field of the invention

The invention relates to the field of aerial refuelling. More specifically, the invention relates to a system and a method to improve a refuelling operation involving a boom hose adaptor.

### Background of the invention

In air-to-air refuelling, a tanker aircraft is used to refuel a receiver aircraft during flight.

There are two main technologies in air-to-air refuelling.

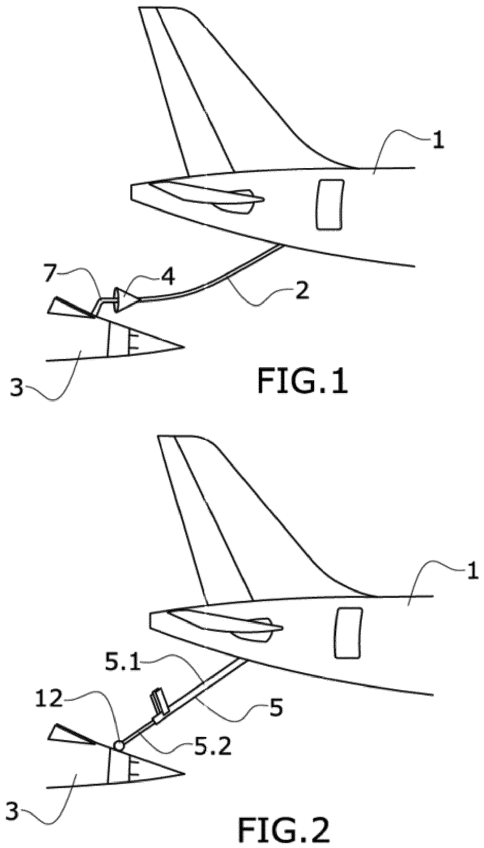

One of them is the so-called hose and drogue system. An embodiment is disclosed in figure 1 of the description. A receiver aircraft comprising a probe moves towards a tanker aircraft, specifically behind its wing, and tries to connect to a coupling end, also known as drogue, situated at the free end of a hose trailed from the tanker aircraft. A probe is a rigid, protruding or pivoted retractable arm placed on the receiver aircraft, at its nose or fuselage, to make the connection. At the end of the probe there is a valve that is closed until it mates with the drogue's forward internal receptacle, after which it opens and allows fuel to pass from the tanker aircraft to the receiver aircraft. The hose is trailed from a drum located at the tanker aircraft. The drum comprises a drum actuator that assures the correct tension of the hose while the coupling end is in contact with the probe of the receiver aircraft. The drum actuator is configured to absorb the relative movements between the tanker aircraft and the receiver aircraft while connected. Therefore, the hose and drogue system does not require the action of any operator on-board to keep a relative distance between both aircraft.

The other known system is the rigid boom method. An embodiment is disclosed in figure 2 of the description. The receiver aircraft moves to a fixed position and a rigid boom, a non-flexible tube, equipped with a telescopic beam attached to the tail of the tanker aircraft is extended by a boom operator inside the tanker aircraft until contact is made.

Compared to the hose and drogue method, the rigid boom method has two main advantages. The first one is that it is able to transfer a greater amount of fuel per minute, and secondly, the receiver position behind the tail cone of the tanker aircraft is normally more stable than the receiver position behind the wing.

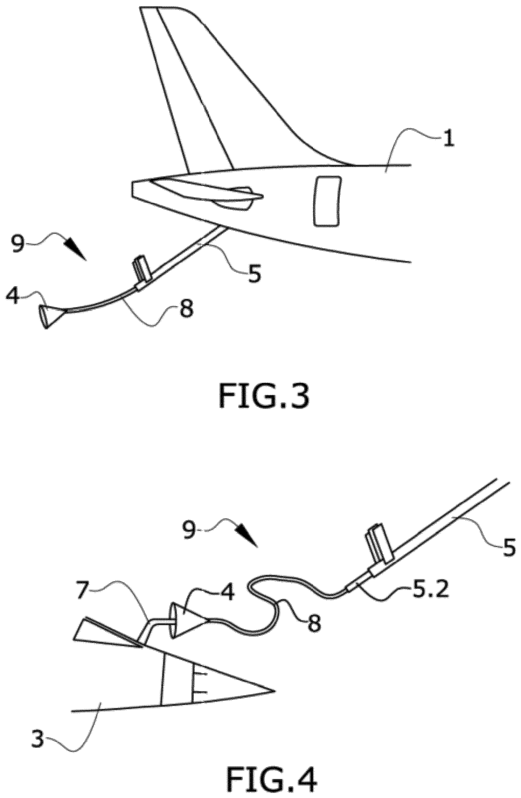

Therefore, a boom hose adaptor has been developed to allow a probe-equipped receiver aircraft to refuel from a boom-equipped tanker aircraft. An embodiment is disclosed in figure 3 of the description. The boom attached to the tanker aircraft is equipped with a hose portion and a coupling end.

However, a boom-equipped tanker aircraft with a boom hose adaptor does not have the automatic tension control as the known hose system previously explained. It forces the receiver aircraft to generate an S-shape deformation in the hose portion. An embodiment is disclosed in figure 4 of the description. This S-shaped hose portion allows relative movements between the tanker aircraft and the receiver aircraft, but these movements are limited to small amplitudes, only compatible with small receiver aircraft. Larger receiver aircraft have larger relative movements that would require a larger S-shape. This is not possible as the length of the hose portion trailing over the rigid boom in a boom hose adaptor configuration is limited by the dimensions of the tanker aircraft. As a consequence, the use of the boom hose adaptor in large receiver aircraft is not allowed.

Some tankers equipped with a rigid boom are also equipped with sensors or cameras that identify the position of the receiver aircraft and drive the rigid boom until the contact with the receiver aircraft is made without the action of the boom operator. However, those systems are not configured to operate when the rigid boom is equipped with a boom hose adaptor, as they are not designed in order to predict nor control the behavior of the attached drogue.

It is known document US2006214059 disclosing refueling booms with multiple couplings, and associated methods and systems. A system in accordance with one embodiment of the invention includes a deployable boom carrying a refueling passage. A first coupler carried by the boom can be operatively coupleable to the refueling passage. The first coupler can be configured to be releasably connected to a receiver aircraft during refueling. A second coupler can be carried by the boom and can be operatively coupleable to the refueling passage, with the second coupler being configured to be releasably connected to a receiver aircraft during refueling. In particular embodiments, the first and second couplers can have different configurations so as to be compatible with aircraft having different refueling arrangements.

### Summary of the invention

The objective of the invention is a system and a method that allow the use of a boom hose adaptor in large receiver aircraft.

The refuelling system comprises:
- a rigid boom configured to be extended from the tanker aircraft and comprising a distal end with respect to the tanker aircraft, i.e., an end away from the tanker aircraft,
- the boom hose adaptor comprising:
   o a hose portion in contact with the distal end of the rigid boom, for instance, attached to the distal end, and
   o a coupling end located at a free end of the hose portion, i.e., at the end of the hose portion furthest from the rigid boom. The coupling end is configured for making contact with a probe of a receiver aircraft.
- at least a sensor configured to be located into the tanker aircraft and to obtain data of the situation of the receiver aircraft with respect to the tanker aircraft, i.e., the way in which the receiver aircraft is placed in relation to its surroundings and specifically to the tanker aircraft,
- a control means configured to be located into the tanker aircraft and connectable to:
   o the sensor to receive data from the sensor, and
   o the tanker aircraft to control the position of the rigid boom to place the boom hose adaptor within a suitable range of positions determined from the data of the parameter obtained from the sensor.

The above system automatically controls the position of the rigid boom equipped with a boom hose adaptor to allow and simplify the refuelling process, in particular for large receiver aircraft. The range of positions allows to absorb the relative movements between the receiver aircraft and the tanker aircraft.

The rigid boom is extendable, and its distal end is also vertically and laterally movable and within a cone of positions.

Particularly, the system comprises a sensor located in the tanker aircraft that obtains data of at least a parameter of the behavior of the receiver aircraft with respect to the tanker aircraft. In an embodiment it is the position and/or attitude of the receiver aircraft with respect to the tanker aircraft.

Position is understood as latitude, longitude, altitude, and time data, while attitude is understood as angular difference measured between an airplane's axis and the line of the Earth's horizon.

Said sensor may be, for instance, a vision system that determines the relative position between the tanker aircraft and the receiver aircraft. The refuelling system may in addition comprise a load sensor that measures the hose forces between the tanker aircraft and the receiver aircraft when coupled.

According to the above obtained data, the control means controls the position of the rigid boom.

The receiver aircraft is no longer forced to maintain a relatively stable position, and can therefore move within a greater operational envelope, that can correspond to the maximum available envelope of the tanker boom system. The control of the position of the rigid boom will avoid the constraints of the state of the art related to the limitations of the S-shape hose portion.

It is also an object of the invention a tanker aircraft comprising a boom hose adaptor and a refuelling system according to the above.

It is also an object of the present invention a refuelling method of a tanker aircraft comprising a boom hose adaptor comprising the following steps:
- approaching between the receiver aircraft and the tanker aircraft, in an embodiment, the receiver aircraft approaches the tanker aircraft,
- extending the rigid boom from the tanker aircraft,
- contacting the coupling end of the tanker aircraft with the probe of the receiver aircraft,
- obtaining data of the situation of the receiver aircraft with respect to the tanker aircraft by a sensor located into the tanker aircraft,
- receiving data from the sensor by a control means located into the tanker aircraft,
- controlling by the control means the position of the rigid boom to place the boom hose adaptor within a range of positions according to the data received from the sensor.

### Description of the figures

To complete the description and to provide for a better understanding of the invention, a set of drawings is provided. Said drawings form an integral part of the description and illustrate preferred embodiments of the invention. The drawings comprise the following figures.
Figure 1 shows a schematic representation of a tanker aircraft and a receiver aircraft being refuelled by a hose and drogue system according to the state of the art.
Figure 2 shows a schematic representation of a tanker aircraft and a receiver aircraft being refuelled by a rigid boom system according to the state of the art.
Figure 3 shows a schematic representation of a tanker aircraft and a probe-equipped receiver aircraft being refuelled by a rigid boom system and a boom hose adaptor according to the state of the art.
Figure 4 shows a schematic representation of the tanker aircraft and the probe-equipped receiver aircraft of figure 3 with the hose portion describing an S-shape to adapt the refuelling system to the relative movements between the tanker aircraft and the receiver aircraft.
Figure 5 shows a schematic representation of a tanker aircraft and a receiver aircraft being refuelled by a rigid boom system and a boom hose adaptor according to an embodiment of the invention.
Figure 6 shows a schematic representation of an embodiment of a load sensor based on the use of strain gauges.

### Detailed description of the invention

Figure 1 discloses a schematic representation of a tanker aircraft (1) and a receiver aircraft (3) being refuelled by a hose and drogue system according to the state of the art. The receiver aircraft (3) moves towards the tanker aircraft (1) and tries to connect to a coupling end (4) or drogue located at the end of the trailed hose (2). The receiver aircraft (3) comprises a probe (7) to make contact with the coupling end (4) of the deployed hose (2).

As previously explained, the above system does not require the action of any operator on-board as a drum actuator located at the tanker aircraft (1) assures the correct tension of the hose (2) while the tanker aircraft (1) and the receiver aircraft (3) are in contact. The drum actuator, therefore, help to absorb the relative movements between the tanker aircraft (1) and the receiver aircraft (3).

In a boom system, the receiver aircraft (3) moves to a fixed position and a rigid boom (5) attached to the tail of the tanker aircraft (1) is piloted by a boom operator inside the tanker aircraft (4) until the contact. The rigid boom (5) comprises a rigid fixed section (5.1) and a telescopic section (5.2).

Several tanker aircraft (1) are equipped with a load sensor (12) located at the end of the rigid boom (5) to measure the loads induced on the system due to the relative movements of the receiver aircraft (3) with respect to the tanker aircraft (1) and, by automatically controlling the position of the rigid boom (5) to minimize such loads. Those load sensors (12) are only designed to achieve a rigid union between the rigid boom (5) and the receiver aircraft (3).

Figure 3 discloses a schematic representation of a tanker aircraft (1) and a receiver aircraft (3) being refuelled by a rigid boom (5) and a boom hose adaptor (9) according to the state of the art. The boom hose adaptor (9) has been developed to allow a probe (7) equipped receiver aircraft (3) to be refuelled from a rigid boom (5). More specifically, the rigid boom (5) attached to the tanker aircraft (1) is equipped with a boom hose adaptor (9) comprising a portion of a hose (8) and a coupling end (4) or drogue at its end. The hose portion (8) is attached to the distal end of the rigid boom (5).

As there is no drum to deploy the hose portion (8), there is no possibility to absorb the relative movements between the receiver aircraft (3) and the tanker aircraft (1). Thus, the receiver aircraft (3) is forced to generate an S- shape deformation in the hose portion (8) in order to absorb said relative movements. This situation is depicted in figure 4.

In an embodiment of the invention, the sensor is a vision system and the control means is configured to determine the relative position between the tanker aircraft (1) and the receiver aircraft (3).

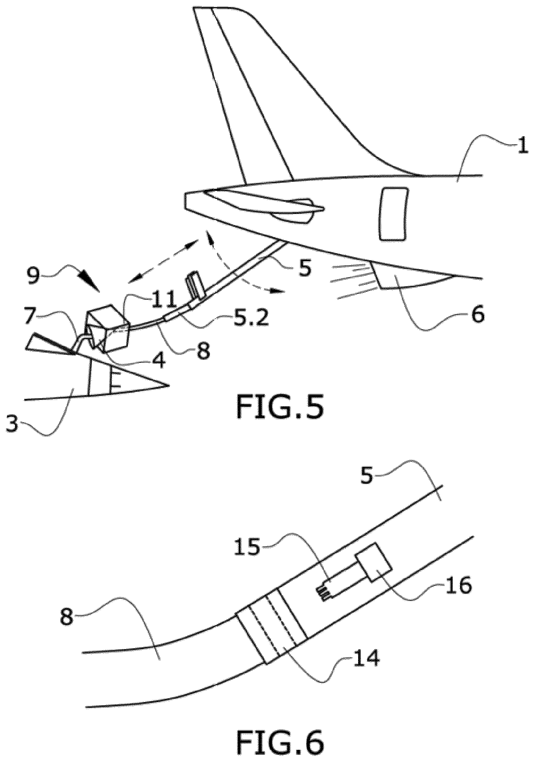

In the embodiment disclosed in figure 5 the vision system is a camera (6) located in the tanker aircraft (1) and pointing to the receiver aircraft (3). The camera (6) is configured to automatically identify the receiver aircraft (3) and to determine the relative position between the tanker aircraft (1) and the receiver aircraft (3).

According to this computed relative position, the refuelling system automatically controls the rigid boom (9) in order to place the coupling end (4) of the boom hose adaptor (9) into, for instance, a specific position or in a virtual box (11) according to the position of the receiver aircraft (3).

The control means is configured to move the rigid boom (5) in a lateral movement, vertical movement and/or elongation (10) in order to place the hose portion (8) in an optimum position.

More specifically, the control means is configured to change the orientation of the rigid boom (5) in any angular direction with respect to the tanker aircraft (1) and/or generate an elongation of the telescopic section (5.2) of the rigid boom (5).

Therefore, figure 5 discloses an embodiment of the refuelling system comprising:
- A rigid boom (5) attached to a tanker aircraft (1) comprising a rigid section (5.1) able to have vertical and lateral movement and a telescopic section (5.2) able to have longitudinal movements along its axis.
- A boom hose adaptor (9) comprising a hose portion (8) and a coupling end (4) attached to the end of the telescopic section of the rigid boom (5).
- A vision system comprising a set of cameras (6) and control means installed on the tanker aircraft (1). The control mean is able to identify the position of the receiver aircraft (3) on the acquired images and in consequence determine the distance and relative position with respect to the tanker aircraft (1).

According the above, the control means identifies through the cameras (6) the position of the receiver aircraft (3) and automatically controls the rigid boom (5) in at least one of its degree of freedom in order to place the coupling end (4) of the boom hose adaptor (9) into an adequate position for the refuelling operation.

In an embodiment, the vision system is based on an infrared system.

In another embodiment, the vision system is based on a Light Detection and Ranging (LIDAR) system.

In another embodiment, the vision system is based on the thermal gradient of the receiver aircraft (3) and its surrounding environment.

In another embodiment, the sensor is a differential navigation system where the relative position between the tanker aircraft (1) and the receiver aircraft (3) is determined by the control system by analyzing the difference of geographical position determined by the navigation suites installed on the tanker aircraft and those installed on the receiver aircraft.

In another embodiment, the sensor is a differential global positioning system where the relative position between the tanker aircraft (1) and the receiver aircraft (3) is determined by the control system by analyzing the difference of geographical position determined by a global positioning system (GPS, ...) installed in the tanker aircraft and another installed on the receiver aircraft.

The refuelling system further comprises a load sensor located (13) in the rigid boom (5) or in the boom hose adaptor (9). The load sensor (13) is configured such that measures the forces between the tanker aircraft (1) and the receiver aircraft (3) when in contact. Prior to the contact the load sensor (13) does not provide valuable information, the refuelling system relies on, for instance, the vision system.

Figure 6 depicts an embodiment of a load sensor (13). The rigid boom (5) is attached to the flexible hose (8) through a flexible mechanical link (14). At the end of the rigid boom (5) are located a set of strain gauges (15) that generates electrical signal according to the efforts applied. Those electrical signals are conditioned by an electronic circuit (16) and transmitted to a boom control system inside the tanker aircraft (1). The boom control system maybe the same control system connectable to the sensor or a different control system.

In addition, the rigid boom (5) or the boom hose adaptor (9) comprises a sensor configured to indicate if the receiver aircraft (3) is latched to the boom hose adaptor coupling end (4).

The rigid boom (5) is controlled in different ways if the receiver aircraft (3) is latched to the boom hose adaptor coupling end (4):
- If the receiver aircraft (3) is latched to the boom hose adaptor coupling end (4), the system moves the rigid boom (5) in such way to minimize the tension on the hose section (8) in an analogue way that a drum installed in a tanker aircraft (1) does in a hose and drogue system.
- If the receiver aircraft (3) is not latched to the boom hose adaptor coupling end (4), the system moves the rigid boom (5) to the optimum position to perform the contact, or to a safe position if the contact has finished.

## Claims

1. Refuelling system of a tanker aircraft (1) comprising a boom hose adaptor (9), the refuelling system comprising:
- a rigid boom (5) configured to be extended from the tanker aircraft (1) and comprising a distal end with respect to the tanker aircraft (1),
- the boom hose adaptor (9), said boom hose adaptor (9) comprising:
o a hose portion (8) in contact with the distal end of the rigid boom (5), and
o a coupling end (4) located at a free end of the hose portion (8), the coupling end (4) configured for making contact with a probe (7) of a receiver aircraft (3),
**characterized in that** the system further comprises:
- at least a sensor configured to be located into the tanker aircraft (1) and to obtain data of the situation of the receiver aircraft (3) with respect to the tanker aircraft (1), and
- a control means configured to be located into the tanker aircraft (1) and connectable to:
o the sensor to receive the data from the sensor, and
o the tanker aircraft (1) to control the position of the rigid boom (5) to place the boom hose adaptor (9) within a range of positions according to the data obtained from the sensor when the coupling end (4) of the boom hose adaptor (9) is in contact with the probe (7) of the receiver aircraft (3),
the sensor being a differential navigation system or a differential global positioning system and the control means being configured to determine the relative position between the tanker aircraft (1) and the receiver aircraft (3).

2. Refuelling system, according to claim 1, wherein the sensor is configured to determine the relative position and/or attitude between the tanker aircraft (1) and the receiver aircraft (3).

3. Refuelling system, according to claim 2, wherein the sensor is a vision system.

4. Refuelling system, according to claim 3, wherein the vision system is based on infrared technology.

5. Refuelling system, according to claim 3, wherein the vision system is based on a Light Detection and Ranging (LIDAR) technology.

6. Refuelling system, according to claim 3, wherein the vision system is based on a thermal gradient of the receiver aircraft (3) and its surrounding environment.

7. Refuelling system, according to any preceding claim, wherein it further comprises a load sensor located in the rigid boom (5) or in the boom hose adaptor (9) and the load sensor is configured such that measures the forces between the tanker aircraft (1) and the receiver aircraft (3) when in contact.

8. Refuelling system, according to any preceding claim, wherein the rigid boom (5) comprises a rigid fixed section (5.1) and a telescopic section (5.2).

9. Refuelling system, according to claim 8, wherein the control means is configured to control the position of the rigid boom (5) by changing the orientation of the rigid boom (5) in any angular direction with respect to the tanker aircraft (1) and/or generate an elongation of the telescopic section (5.2) of the rigid boom (5).

10. Refuelling system, according to any preceding claim, wherein the rigid boom (5) or the boom hose adaptor (9) comprises a sensor configured to indicate if the receiver aircraft (3) is latched to the boom hose adaptor coupling end (4).

11. A tanker aircraft (1) comprising a boom hose adaptor (9) **characterized in that** it comprises a refuelling system according to any preceding claim.

12. Refuelling method of a tanker aircraft (1) comprising a boom hose adaptor (9), the tanker aircraft (1) comprising:
- a rigid boom (5) configured to be extended from the tanker aircraft (1) and comprising a distal end with respect to the tanker aircraft (1),
- the boom hose adaptor (9) comprising:
o a hose portion (8) in contact with the distal end of the rigid boom (5), and
o a coupling end (4) located at a free end of the hose portion (8), the coupling end (4) configured for making contact with a probe (7) of a receiver aircraft (3),
**characterized in that** the refuelling method comprises the following steps:
- approaching between the receiver aircraft (3) and the tanker aircraft (1),
- extending the rigid boom (5) from the tanker aircraft (1),
- contacting the coupling end (4) of the tanker aircraft (1) with the probe (7) of the receiver aircraft (3),
- obtaining data of the situation of the receiver aircraft (3) with respect to the tanker aircraft (1) by a sensor located into the tanker aircraft (1), the sensor being a differential navigation system or a differential global positioning system,
- receiving data from the sensor by a control means located into the tanker aircraft (1),
- controlling by the control means the position of the rigid boom (5) to place the boom hose adaptor (9) within a range of positions according to the data received from the sensor, when the coupling end of the boom hose adaptor is in contact with the probe of the receiver aircraft.

## Patentansprüche

1. Betankungssystem eines Tankflugzeugs (1), umfassend einen Auslegerschlauchadapter (9), wobei das Betankungssystem Folgendes umfasst:
- einen starren Ausleger (5), der konfiguriert ist, um vom Tankflugzeug (1) ausgefahren zu werden und ein distales Ende in Bezug auf das Tankflugzeug (1) aufweist,
- den Auslegerschlauchadapter (9), wobei der Auslegerschlauchadapter (9) Folgendes umfasst:
o einen Schlauchabschnitt (8), der mit dem distalen Ende des starren Auslegers (5) in Kontakt steht, und
o ein Kupplungsende (4), das sich an einem freien Ende des Schlauchabschnitts (8) befindet, wobei das Kupplungsende (4) so konfiguriert ist, dass es mit einer Sonde (7) eines Empfängerflugzeugs (3) in Kontakt treten kann,
**dadurch gekennzeichnet, dass** das System ferner Folgendes umfasst:
- mindestens ein Sensor, der konfiguriert ist, um sich im Tankflugzeug (1) zu befinden und Positionsdaten des Empfängerflugzeugs (3) in Bezug auf das Tankflugzeug (1) erlangt, und
- eine Steuereinrichtung, die konfiguriert ist, um im Tankflugzeug (1) untergebracht zu sein und mit Folgendem verbunden werden kann:
dem Sensor zum Empfangen der Daten von dem Sensor; und
dem Tankflugzeug (1) zur Steuerung der Position des starren Auslegers (5) zur Positionierung des Auslegerschlauchadapters (9) innerhalb eines Positionsbereichs gemäß den vom Sensor erhaltenen Daten, wenn das Kupplungsende (4) des Auslegerschlauchadapters (9) mit der Sonde (7) des Empfängerflugzeugs (3) in Kontakt steht,
wobei der Sensor ein differentielles Navigationssystem oder ein differentielles globales Positionierungssystem ist, und die Steuerungseinrichtung so konfiguriert ist, dass sie die relative Position zwischen dem Tankflugzeug (1) und dem Empfängerflugzeug (3) bestimmt.

2. Betankungssystem nach Anspruch 1, wobei der Sensor konfiguriert ist, um die relative Position und/oder Lage zwischen dem Tankflugzeug (1) und dem Empfängerflugzeug (3) zu bestimmen.

3. Betankungssystem nach Anspruch 2, wobei der Sensor ein Sichtsystem ist.

4. Betankungssystem nach Anspruch 3, wobei das Sichtsystem auf Infrarottechnologie basiert.

5. Betankungssystem nach Anspruch 3, wobei das Sichtsystem auf einer LIDAR-Technologie (Light Detection and Ranging) basiert.

6. Betankungssystem nach Anspruch 3, wobei das Sichtsystem auf einem thermischen Gradienten des Empfängerflugzeugs (3) und seiner Umgebung basiert.

7. Betankungssystem nach einem der vorhergehenden Ansprüche, wobei es ferner einen Lastsensor umfasst, der im starren Ausleger (5) oder im Auslegerschlauchadapter (9) angeordnet ist und der Lastsensor so konfiguriert ist, dass er die Kräfte zwischen dem Tankflugzeug (1) und dem Empfängerflugzeug (3) im Kontakt misst.

8. Betankungssystem nach einem der vorhergehenden Ansprüche, wobei der starre Ausleger (5) einen starren festen Abschnitt (5.1) und einen Teleskopabschnitt (5.2) umfasst.

9. Betankungssystem nach Anspruch 8, wobei die Steuereinrichtung so konfiguriert ist, dass sie die Position des starren Auslegers (5) durch Ändern der Ausrichtung des starren Auslegers (5) in beliebiger Winkelrichtung in Bezug auf das Tankflugzeug (1) steuert und/oder eine Verlängerung des Teleskopabschnitts (5.2) des starren Auslegers (5) generiert.

10. Betankungssystem nach einem der vorhergehenden Ansprüche, wobei der starre Ausleger (5) oder der Auslegerschlauchadapter (9) einen Sensor umfasst, der angibt, ob das Empfängerflugzeug (3) am Kupplungsende (4) des Auslegerschlauchadapters eingerastet ist.

11. Tankflugzeug (1), umfassend einen Auslegerschlauchadapter (9) und **dadurch gekennzeichnet, dass** es ein Betankungssystem nach einem der vorhergehenden Ansprüche umfasst.

12. Betankungsverfahren für ein Tankflugzeug (1), umfassend einen Auslegerschlauchadapter (9), wobei das Tankflugzeug (1) Folgendes umfasst:
- einen starren Ausleger (5), der konfiguriert ist, um vom Tankflugzeug (1) ausgefahren zu werden und ein distales Ende in Bezug auf das Tankflugzeug (1) aufweist,
- den Auslegerschlauchadapter (9), umfassend:
o einen Schlauchabschnitt (8), der mit dem distalen Ende des starren Auslegers (5) in Kontakt steht, und
o ein Kupplungsende (4), das sich an einem freien Ende des Schlauchabschnitts (8) befindet, wobei das Kupplungsende (4) so konfiguriert ist, dass es mit einer Sonde (7) eines Empfängerflugzeugs (3) in Kontakt treten kann,
- **dadurch gekennzeichnet, dass** das Betankungsverfahren die folgenden Schritte umfasst:
- Annäherung zwischen dem Empfangsflugzeug (3) und dem Tankflugzeug (1),
- Ausfahren des starren Auslegers (5) vom Tankflugzeug (1),
Kontaktierung des Kupplungsendes (4) des Tankflugzeugs (1) mit der Sonde (7) des Empfängerflugzeugs (3),
Erlangen von Positionsdaten des Empfängerflugzeugs (3) in Bezug - auf das Tankflugzeug (1) durch einen im Tankflugzeug (1) befindlichen Sensor, wobei es sich bei dem Sensor um ein differentielles Navigationssystem oder ein differentielles globales Positionierungssystem handelt.
- Empfangen von Daten von dem Sensor durch eine im Tankflugzeug befindliche Steuereinrichtung (1),
- Steuern, durch die Steuereinrichtung der Position des starren Auslegers (5) zur Positionierung des Auslegerschlauchadapters (9) innerhalb eines Positionsbereichs gemäß den vom Sensor erhaltenen Daten, wenn das Kupplungsende des Auslegerschlauchadapters mit der Sonde des Empfängerflugzeugs in Kontakt steht.

## Revendications

1. Système de ravitaillement en carburant d'un avion-citerne (1) comprenant un adaptateur de tuyau de flèche (9), le système de ravitaillement en carburant comprenant :
- une flèche rigide (5) configurée pour être étendue à partir de l'avion-citerne (1) et comprenant une extrémité distale par rapport à l'avion-citerne (1),
- l'adaptateur de tuyau de flèche (9), ledit adaptateur de tuyau de flèche (9) comprenant :
o une partie tuyau (8) en contact avec l'extrémité distale de la flèche rigide (5), et
o une extrémité d'accouplement (4) située à une extrémité libre de la partie tuyau (8), l'extrémité d'accouplement (4) étant configurée pour entrer en contact avec une sonde (7) d'un avion ravitaillé (3),
**caractérisé en ce que** le système comprend également :
- au moins un capteur configuré pour être situé à l'intérieur de l'avion-citerne (1) et pour obtenir des données sur la situation de l'avion ravitaillé (3) par rapport à l'avion-citerne (1), et
- un moyen de commande configuré pour être situé à l'intérieur de l'avion-citerne (1) et pouvant être connecté :
o au capteur pour recevoir les données en provenance du capteur, et
o à l'avion-citerne (1) pour contrôler la position de la flèche rigide (5) pour placer l'adaptateur de tuyau de flèche (9) dans une plage de positions en fonction des données obtenues du capteur lorsque l'extrémité d'accouplement (4) de l'adaptateur de tuyau de flèche (9) est en contact avec la sonde (7) de l'avion ravitaillé (3),
le capteur étant un système de navigation différentielle ou un système de positionnement mondial différentiel et le moyen de commande étant configuré pour déterminer la position relative entre l'avion-citerne (1) et l'avion ravitaillé (3).

2. Système de ravitaillement en carburant, selon la revendication 1, dans lequel le capteur est configuré pour déterminer la position relative et/ou l'assiette entre l'avion-citerne (1) et l'avion ravitaillé (3).

3. Système de ravitaillement en carburant, selon la revendication 2, dans lequel le capteur est un système de vision.

4. Système de ravitaillement en carburant, selon la revendication 3, dans lequel le système de vision est basé sur la technologie infrarouge.

5. Système de ravitaillement en carburant, selon la revendication 3, dans lequel le système de vision est basé sur la technologie de détection et télémétrie par ondes lumineuses (LIDAR).

6. Système de ravitaillement en carburant, selon la revendication 3, dans lequel le système de vision est basé sur un gradient thermique de l'avion ravitaillé (3) et de son environnement.

7. Système de ravitaillement en carburant, selon une quelconque revendication précédente, dans lequel il comprend également un capteur de charge situé dans la flèche rigide (5) ou dans l'adaptateur de tuyau de flèche (9) et le capteur de charge est configuré de sorte à mesurer les forces entre l'avion-citerne (1) et l'avion ravitaillé (3) lorsqu'ils sont en contact.

8. Système de ravitaillement en carburant, selon une quelconque revendication précédente, dans lequel la flèche rigide (5) comprend une section fixe rigide (5.1) et une section télescopique (5.2).

9. Système de ravitaillement en carburant, selon la revendication 8, dans lequel le moyen de commande est configuré pour contrôler la position de la flèche rigide (5) en changeant l'orientation de la flèche rigide (5) dans n'importe quelle direction angulaire par rapport à l'avion-citerne (1) et/ou générer un allongement de la section télescopique (5.2) de la flèche rigide (5).

10. Système de ravitaillement en carburant, selon une quelconque revendication précédente, dans lequel la flèche rigide (5) ou l'adaptateur de tuyau de flèche (9) comprend un capteur configuré pour indiquer si l'avion ravitaillé (3) est verrouillé à l'extrémité d'accouplement de l'adaptateur de tuyau de flèche (4).

11. Avion-citerne (1) comprenant un adaptateur de tuyau de flèche (9) **caractérisé en ce qu'**il comprend un système de ravitaillement en carburant selon une quelconque revendication précédente.

12. Procédé de ravitaillement en carburant d'un avion-citerne (1) comprenant un adaptateur de tuyau de flèche (9), l'avion-citerne (1) comprenant :
- une flèche rigide (5) configurée pour être étendue à partir de l'avion-citerne (1) et comprenant une extrémité distale par rapport à l'avion-citerne (1),
- l'adaptateur de tuyau de flèche (9) comprenant :
o une partie tuyau (8) en contact avec l'extrémité distale de la flèche rigide (5), et
o une extrémité d'accouplement (4) située à une extrémité libre de la partie tuyau (8), l'extrémité d'accouplement (4) étant configurée pour entrer en contact avec une sonde (7) d'un avion ravitaillé (3),
**caractérisé en ce que** le procédé de ravitaillement en carburant comprend les étapes suivantes :
- approche entre l'avion ravitaillé (3) et l'avion-citerne (1),
- extension de la flèche rigide (5) à partir de l'avion-citerne (1),
- mise en contact de l'extrémité d'accouplement (4) de l'avion-citerne (1) avec la sonde (7) de l'avion ravitaillé (3),
- obtention des données sur la situation de l'avion ravitaillé (3) par rapport à l'avion-citerne (1) par un capteur situé à l'intérieur de l'avion-citerne (1), le capteur étant un système de navigation différentielle ou un système de positionnement mondial différentiel,
- réception des données en provenance du capteur par un moyen de commande situé à l'intérieur de l'avion-citerne (1),
- contrôle, à l'aide du moyen de commande, de la position de la flèche rigide (5) pour placer l'adaptateur de tuyau de flèche (9) dans une plage de positions en fonction des données reçues en provenance du capteur, lorsque l'extrémité d'accouplement de l'adaptateur de tuyau de flèche est en contact avec la sonde de l'avion ravitaillé.
